# EUROPÄISCHE PATENTSCHRIFT

(11) **EP 2 642 159 B1**
(45) Veröffentlichungstag und Bekanntmachung des Hinweises auf die Patenterteilung: **29.04.2015**
(21) Anmeldenummer: 12160880.6
(22) Anmeldetag: 22.03.2012
(51) Int. Cl.: F16H 1/46, F16H 35/10

(54) **Mehrstufiges Planetengetriebe**
Multi-layer planetary drive
Engrenage épicycloïdal en plusieurs étapes

(43) Veröffentlichungstag der Anmeldung: 25.09.2013
(73) Patentinhaber: IMS Gear GmbH, 78166 Donaueschingen (DE)
(72) Erfinder: Hagedorn, Heinz Gert, 78628 Rottweil (DE)
(74) Vertreter: Westphal, Mussgnug & Partner Patentanwälte mbB

(56) Entgegenhaltungen:
- EP-A1- 2 241 781
- EP-A2- 0 170 505
- EP-A2- 2 369 125
- DE-A1-102010 020 414
- US-A- 5 336 136

## Beschreibung

Die Erfindung betrifft ein mehrstufiges Planetengetriebe gemäß Oberbegriff des Patentanspruchs 1, und es aus der gattungsgemässen US5336136A bekannt ist.

Die Funktion von Planetengetrieben ist bekannt. In der Mitte befindet sich ein Sonnenrad, das von einem Motor angetrieben wird, der über einen Motorflansch mit dem Planetengetriebe verbunden ist. Das Sonnenrad überträgt seine Bewegung auf wenigstens drei umlaufende, eine Getriebestufe bildende Planetenräder, die auf Lagerbolzen eines Planetenträgers angeordnet sind. Bei mehreren Getriebestufen ist der letzte Planetenträger mit einer Abtriebswelle fest verbunden und sorgt so für die Kraftübertragung am Abtrieb. Außen laufen die Planetenräder in einem mit einem Gehäuse drehfest verbundenen Hohlrad. Ferner ist das Gehäuse abtriebsseitig mit einem Abtriebsflansch verbunden.

Im Hinblick auf die bei einem Betrieb von Geradstirnrädergetrieben auftretenden Geräusche ist es bekannt, Getriebeanordnungen mit Schrägverzahnungen zu versehen, um dadurch einen leiseren Betrieb zu ermöglichen. Jedoch können auch damit nicht in allen Fällen, insbesondere bei mehrstufigen Planetengetrieben mit gleichzeitiger Schräg- und Geradverzahnung ein befriedigendes Geräuschverhalten erzielt werden.

Ferner sind solche mehrstufigen Planetengetriebe aufwendig und teuer in deren Herstellung, da die als Hohlräder verwendeten Zahnkränze mit einer Geradverzahnung und einer Schrägverzahnung zur Bildung eines einteiligen, bspw. zweistufigen Zahnkranzes miteinander verschraubt und/oder verklebt werden müssen, bevor ein derart gebildeter Zahnkranz von einem Gehäuse des Planetengetriebes aufgenommen werden kann.

Die Aufgabe der Erfindung ist es, ein mehrstufiges Planetengetriebe der eingangs genannten Art bereitzustellen, mit dem ein verbessertes Geräuschverhalten erzielbar ist und das gleichzeitig kostengünstig hergestellt werden kann.

Diese Aufgabe wird gelöst durch ein mehrstufiges Planetengetriebe mit den Merkmalen des Patentanspruchs 1.

Ein solches mehrstufiges Planetengetriebe mit wenigstens zwei mit einem Gehäuse drehfest verbundenen Hohlrädern mit Innenverzahnung und wenigstens zwei Sonnenrädern, die jeweils mit auf einem Planetenträger angeordneten Planetenrädern und einem Hohlrad kämmen, zeichnet sich erfindungsgemäß dadurch aus, dass zur Bildung einer Getriebestufe mit wenigstens einem Hohlrad das Gehäuse als zylinderförmiges Getriebegehäuse mit Innenverzahnung einstückig ausgebildet ist, ferner zur Bildung wenigstens einer weiteren Getriebestufe ein Kunststoffhohlrad mit Innenverzahnung von dem Getriebegehäuse aufgenommen wird, zur drehfesten Verbindung des Kunststoffhohlrades mit dem Getriebegehäuse Verdrehsicherungsmittel vorgesehen sind und zur stirnseitigen Verbindung des Kunststoffhohlrades (20) mit der Innenverzahnung (11) des Getriebegehäuses (10) eine Steckverzahnung (22) als Verdrehsicherungsmittel vorgesehen ist.

Mit dieser erfindungsgemäßen Lösung lässt sich aufgrund der Verwendung eines Kunststoffhohlrades ein wesentlich verbessertes Geräuschverhalten erzielen. Gleichzeitig wird die Herstellung des erfindungsgemäßen Planetengetriebes mit einem solchen einstückigen Kunststoffhohlrad und dem einstückigen Getriebegehäuse wesentlich reduziert, da zum einen die Herstellungskosten dieser Bauteile gering sind und zum anderen auch die Montage mit diesen Bauteilen einfacher ist.

In einer Weiterbildung der Erfindung ist es vorgesehen, dass das Getriebegehäuse zur Aufnahme des Kunststoffhohlrades eine an den Außendurchmesser des Kunststoffhohlrades angepasste, axial an die Innenverzahnung sich anschließende Aufnahmebohrung aufweist. Da sich damit die Hohlräder direkt benachbart sind, ergibt sich ein kompakter Aufbau des erfindungsgemäßen Planetengetriebes, wobei gleichzeitig diese Aufnahmebohrung eine einfache Montage des Kunststoffhohlrades erlaubt.

Erfindungsgemäß ist zur stirnseitigen Verbindung des Kunststoffhohlrades mit der Innenverzahnung des Getriebegehäuses eine Steckverzahnung als Verdrehsicherungsmittel vorgesehen. Dies führt zu einer verbesserten Momentenaufnahme des Kunststoffhohlrades, insbesondere wenn das Kunststoffhohlrad eine Schrägverzahnung aufweist, werden die dabei entstehenden Axialkräfte besser aufgenommen.

Vorzugsweise wird gemäß einer Weiterbildung der Erfindung die Steckverzahnung dadurch realisiert, dass das Kunststoffhohlrad auf seiner der Innenverzahnung zugewandten Stirnseite wenigstens ein in diese Innenverzahnung des Getriebegehäuses eingreifendes Zahnelement oder Zahnsegment aufweist. Eine verbesserte Kraftübertragung ergibt sich weiterbildungsgemäß dadurch, dass solche Zahnelemente ringförmig auf der Stirnseite des Kunststoffhohlrades angeordnet sind, die in die Innenverzahnung des Getriebegehäuses eingreifen.

In einer weiteren Ausgestaltung ist es vorgesehen, einen mit dem Getriebegehäuse drehfest verbundenen Lagerflansch, der vorzugsweise ein Motorflansch darstellt, vorzusehen und diesen zur Verdrehsicherung zu verwenden, indem als Verdrehsicherungsmittel wenigstens ein Nut- und Zungenelement zur drehfesten Verbindung des Kunststoffhohlrades mit dem Lagerflansch verwendet wird. Vorzugsweise ist ein solches Nut- und Zungenelement derart ausgebildet, dass das Kunststoffhohlrad auf der flanschseitigen Stirnfläche wenigstens ein Zungenelement aufweist und dieses Zungenelement in eine Nut des Lagerflansches eingreift. Dabei wird ein solcher Lagerflansch bspw. mittels einer Schraubverbindung mit dem Getriebegehäuse drehfest verbunden.

Wenn weiterbildungsgemäß der Lagerflansch als Motorflansch dient, bildet das Kunststoffhohlrad mit dem zugehörigen Sonnenrad und den zugehörigen Planetenrädern eine erste Getriebestufe, wobei das Getriebegehäuse mit der Innenverzahnung zusammen mit dem zugehörigen Sonnenrad und den zugehörigen Planetenrädern eine zweite Getriebestufe bildet. Bei einem zweistufigen Planetengetriebe bildet der Planetenträger dieser zweiten Getriebestufe die Abtriebsachse.

Besonders vorteilhaft ist es gemäß einer weiteren Ausgestaltung der Erfindung, wenn die Innenverzahnung des Kunststoffhohlrades als Schrägverzahnung ausgebildet ist, wobei die Innenverzahnung des Getriebegehäuses eine Geradverzahnung aufweist. Mit dieser Schrägverzahnung des Kunststoffhohlrades wird eine weitere Geräuschreduzierung im Betrieb erzielt.

In einfacher und kostengünstiger Weise kann weiterbildungsgemäß das Kunststoffhohlrad als Spritzgussteil hergestellt werden. Vorzugsweise wird dabei für das Getriebegehäuse Metall verwendet.

Die Erfindung wird nachfolgend anhand von Ausführungsbeispielen unter Bezugnahme auf die beigefügten Figuren ausführlich beschrieben. Es zeigen:
- Figur 1: eine Explosionsdarstellung eines zweistufigen Planetengetriebes in zwei Ausführungsbeispielen der Erfindung, und
- Figur 2: eine perspektivische Darstellung des Getriebegehäuses nach Figur 1.

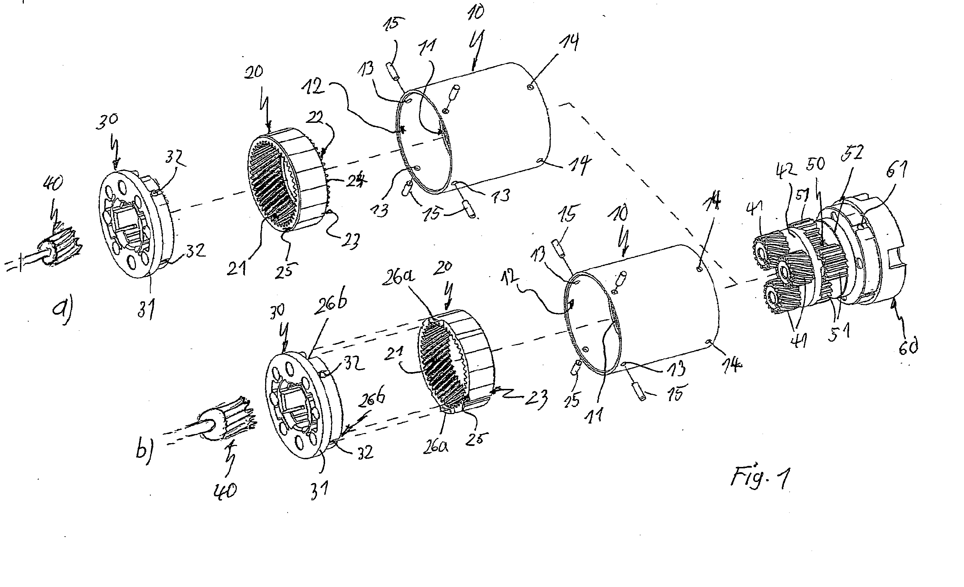

Die in Figur 1a und Figur 1b dargestellten zweistufigen Planentengetriebe umfassen jeweils ein einteilig aus Metall hergestelltes Getriebegehäuse 10 mit einer geraden Innenverzahnung 11, ein Kunststoffhohlrad 20 mit einer schrägen Innenverzahnung 21, einen Planetenräder 41 tragenden ersten Planetenträger 42 sowie einen Planetenräder 51 tragenden zweiten Planetenträger 52. Ein mit dem ersten Planetenträger 42 verbundenes Sonnenrad 50 kämmt mit den Planetenräder 51, der zweite Planetenträger 52 ist mit einer in Figur 1 nicht dargestellten Abtriebswelle verbunden und bildet die abtriebsseitige Stirnseite des Getriebegehäuses 10.

Auf der gegenüberliegenden Stirnseite des Getriebegehäuses 10 bildet ein Lagerflansch als Motorflansch 30 den Abschluss, der mit einem nicht dargestellten Motor verbunden ist. Die in der Figur 1 schematisch dargestellte Antriebswelle dieses Motors weist ein Ritzel auf, das als Sonnenrad 40 zur Bildung einer ersten Getriebestufe mit den Planetenrädern 41 und der Innenverzahnung 21 des Kunststoffhohlrades kämmt. Eine zweite Getriebestufe wird von dem Sonnenrad 50 zusammen mit den Planetenrädern 51 und der Verzahnung 11 des Getriebegehäuses 10 gebildet.

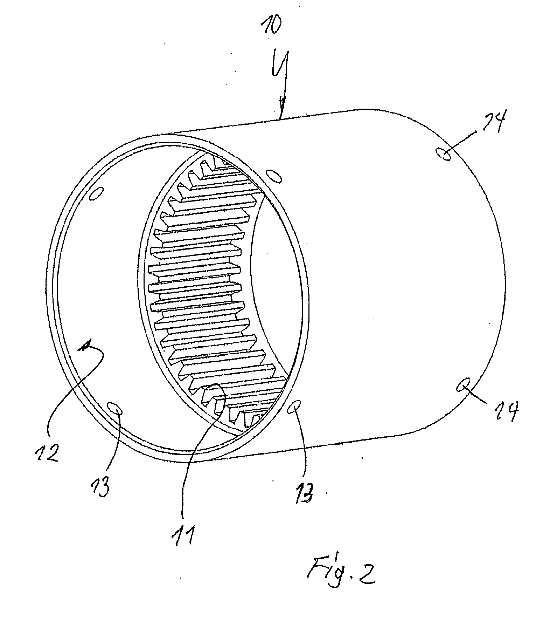

Die Figur 2 zeigt das rohrförmige Getriebegehäuse 10 mit der Innenverzahnung 11 in einer vergrößerten Darstellung. Auf der Antriebsseite weist dieses Getriebegehäuse 10 eine Aufnahmebohrung 12 für das Kunststoffhohlrad 20 auf. Daher ist der innere Durchmesser dieser Aufnahmebohrung 12 an den äußeren Durchmesser des Kunststoffhohlrades 20 angepasst, so dass mit dem Einführen desselben in diese Aufnahmebohrung 12 das Kunststoffhohlrad 20 mit seiner Stirnfläche 23 an dem von der Innenverzahnung 11 gebildeten Zahnkranz anliegt.

Die drehfeste Verbindung des Kunststoffhohlrades 20 mit dem Getriebegehäuse 10 ist in den beiden Figuren 1a und 1b in unterschiedlicher Weise realisiert.

So weist das Kunststoffhohlrad 20 nach Figur 1a auf seiner Stirnseite 23 eine Steckverzahnung 22 auf, die von radial auf dieser Stirnfläche 23 umlaufenden Zahnelementen 24 gebildet wird. Im in das Getriebegehäuse 10 eingebauten Zustand greifen diese Zahnelemente 24 in die geräumte Geradverzahnung 11 ein, so dass dadurch eine drehfeste Verbindung zum Getriebegehäuse 10 entsteht, wenn nach dem Einführen des Kunststoffhohlrades 20 auch der Motorflansch 30 in die Aufnahmebohrung 12 eingeführt wird. Dabei ist die Tiefe dieser Aufnahmebohrung 12 so gewählt, dass das Kunststoffhohlrad 12 zwischen der Innenverzahnung 11 des Getriebegehäuses 10 und dem Motorflansch 30 axialspielfrei gehalten wird. Der Motorflansch 30 weist eine umlaufende Schulter 31 auf, die an der Stirnfläche des Getriebegehäuses 10 anliegt und wird mittels Verschraubungsmitteln 15 über Bohrungen 13 in der zylinderförmigen Wand des Getriebegehäuses 10, die mit entsprechenden Bohrungen 32 in dem Motorflansch 30 korrespondieren, mit dem Getriebegehäuse 10 verschraubt.

Die Verdrehsicherung gemäß Figur 1b erfolgt dagegen über eine drehfeste Verbindung des Kunststoffhohlrades 20 mit dem Motorflansch 30, der in gleicher Weise wie in Figur 1a dargestellt, mittels Verschraubungsmitteln 15 und zugehörigen Bohrungen 13 und 32 mit dem Getriebegehäuse 10 verschraubt wird. Diese Verdrehsicherung erfolgt mittels Nut- und Zungenelementen 26a und 26b, wobei zwei diametral gegenüberliegende Zungenelemente 26a auf der antriebsseitigen Stirnfläche 25 des Kunststoffhohlrades 20 angeordnet ist, die in damit korrespondierende Nuten 26b des Motorflansches 30 eingreifen, wenn sowohl das Kunststoffhohlrad 20 als auch der Motorflansch 30 axialspielfrei in von der Aufnahmebohrung 12 des Getriebegehäuses 10 aufgenommen wurden.

Der Abtriebsflansch 60 mit den Planetenträgern 42 und 52 wird in ähnlicher Weise mittels Schraubverbindungsmitteln und korrespondierenden Bohrungen 14 in dem Getriebegehäuse 10 und Bohrungen 61 in dem Abtriebsflansch 60 mit dem Getriebegehäuse 10 drehfest verbunden.

Das Geräuschverhalten dieser in Figur 1 dargestellten Planetengetriebe wird durch die Verwendung des Kunststoffhohlrades 20 mit Schrägverzahnung, hergestellt als einteiliges Spritzgussteil, wesentlich verbessert. Dadurch werden zum einen die Herstellkosten reduziert und zum anderen auch geringe Montagekosten erzielt, da vor der Montage des Abtriebsflanschs 60 mit den zugehörigen Teilen lediglich das Kunststoffhohlrad und der Motorflansch in das Getriebegehäuse 10 eingeführt und verschraubt werden müssen.

Die Ausführungsbeispiele gemäß Figur 1 zeigen ein zweistufiges Planetengetriebe. Natürlich können auch höherstufige Getriebe erzeugt werden, indem mehrere axial hintereinanderliegende Kunststoffhohlräder in eine Aufnahmebohrung des Getriebegehäuses eingebaut werden, wobei diese Kunststoffhohlräder untereinander mit einer Steckverzahnung oder mit Zungen- und Nutelementen drehfest miteinander verbunden werden.

Ferner können auch zur Bildung einer weiteren Getriebestufe ein weiterer Planetenträger vorgesehen werden, dessen Planetenräder ebenso mit der Innenverzahnung des Getriebegehäuses kämmen.

Mit Vorteil sind solche erfindungsgemäße mehrstufige Planetengetriebe im Kraftfahrzeugbau, insbesondere zum Öffnen und/oder Schließen von Heckklappen von Kraftfahrzeugen einsetzbar.

### Bezugszeichenliste

- 10: Getriebegehäuse
- 11: Innenverzahnung
- 12: Aufnahmebohrung
- 13: Bohrungen des Getriebegehäuses
- 14: Bohrungen des Getriebegehäuses
- 15: Verschraubungsmittel

- 20: Kunststoffhohlrad
- 21: Innenverzahnung des Kunststoffhohlrades 20
- 22: Steckverzahnung
- 23: Stirnfläche des Kunststoffhohlrades 20
- 24: Zahnelement
- 25: Stirnfläche des Kunststoffhohlrades 20
- 26a: Zungenelement
- 26b: Nut

- 30: Lagerflansch, Motorflansch
- 31: Schulter des Motorflanschs
- 32: Bohrungen im Motorflansch

- 40: Sonnenrad
- 41: Planetenräder
- 42: Planetenträger der Planentenräder 41

- 50: Sonnenrad
- 51: Planetenräder
- 52: Planetenträger der Planentenräder 51

- 60: Abtriebsflansch
- 61: Bohrungen im Abtriebsflansch

## Patentansprüche

1. Mehrstufiges Planetengetriebe mit wenigstens zwei mit einem Gehäuse drehfest verbundenen Hohlrädern mit Innenverzahnung und wenigstens zwei Sonnenrädern, die jeweils mit auf einem Planetenträger angeordneten Planetenrädern und einem Hohlrad kämmen, wobei
zur Bildung einer Getriebestufe mit wenigstens einem Hohlrad das Gehäuse als zylinderförmiges Getriebegehäuse (10) mit Innenverzahnung (11) einstückig ausgebildet ist, und wobei
zur Bildung wenigstens einer weiteren Getriebestufe ein Kunststoffhohlrad (20) mit Innenverzahnung (21) von dem Getriebegehäuse (10) aufgenommen wird, und
zur drehfesten Verbindung des Kunststoffhohlrades (20) mit dem Getriebegehäuse (10) Verdrehsicherungsmittel (22, 23a, 23b) vorgesehen sind,
**dadurch gekennzeichnet, dass**
zur stirnseitigen Verbindung des Kunststoffhohlrades (20) mit der Innenverzahnung (11) des Getriebegehäuses (10) eine Steckverzahnung (22) als Verdrehsicherungsmittel vorgesehen ist.

2. Mehrstufiges Planetengetriebe nach Anspruch 1,
**dadurch gekennzeichnet, dass**
das Getriebegehäuse (10) zur Aufnahme des Kunststoffhohlrades (20) eine an den Außendurchmesser des Kunststoffhohlrades (20) angepasste, axial an die Innenverzahnung (11) sich anschließende Aufnahmebohrung (12) aufweist.

3. Mehrstufiges Planetengetriebe nach Anspruch 2,
**dadurch gekennzeichnet, dass**
das Kunststoffhohlrad (20) als Steckverzahnung auf seiner der Innenverzahnung (11) zugewandten Stirnseite (23) wenigstens ein in diese Innenverzahnung (11) des Getriebegehäuses (10) eingreifendes Zahnelement (24) oder Zahnsegment aufweist.

4. Mehrstufiges Planetengetriebe nach Anspruch 3,
**dadurch gekennzeichnet, dass**
als Steckverzahnung Zahnelemente (24) ringförmig auf der Stirnseite (23) des Kunststoffhohlrades (20) angeordnet sind, die in die Innenverzahnung (11) des Getriebegehäuses (10) eingreifen.

5. Mehrstufiges Planetengetriebe nach Anspruch 2,
**dadurch gekennzeichnet, dass**
- ein mit dem Getriebegehäuse (10) drehfest verbundener Lagerflansch (30) vorgesehen ist, und
- als Verdrehsicherungsmittel wenigstens ein Nut- und Zungenelement (26a, 26b) zur drehfesten Verbindung des Kunststoffhohlrades (20) mit dem Lagerflansch (30) vorgesehen ist.

6. Mehrstufiges Planetengetriebe nach Anspruch 3,
**dadurch gekennzeichnet, dass**
das Kunststoffhohlrad (20) auf der flanschseitigen Stirnfläche (25) wenigstens ein Zungenelement (23a) aufweist, welches in eine Nut (23b) des Lagerflansches (30) eingreift.

7. Mehrstufiges Planetengetriebe nach einem der vorhergehenden Ansprüche,
**dadurch gekennzeichnet, dass**
- das Kunststoffhohlrad (20) mit dem zugehörigen Sonnenrad (40) und den zugehörigen Planetenrädern (41) eine erste Getriebestufe bildet, und
- das Getriebegehäuse (10) mit der Innenverzahnung (11) zusammen mit dem zugehörigen Sonnenrad (50) und den zugehörigen Planetenrädern (51) eine zweite Getriebestufe bildet.

8. Mehrstufiges Planetengetriebe nach einem der vorhergehenden Ansprüche,
**dadurch gekennzeichnet, dass**
- die Innenverzahnung (21) des Kunststoffhohlrades (20) als Schrägverzahnung ausgebildet ist, und
- die Innenverzahnung (11) des Getriebegehäuses (10) als Geradverzahnung ausgebildet ist.

9. Mehrstufiges Planetengetriebe nach einem der vorhergehenden Ansprüche,
**dadurch gekennzeichnet, dass**
das Kunststoffhohlrad (20) als Spritzgussteil hergestellt wird.

10. Mehrstufiges Planetengetriebe nach einem der vorhergehenden Ansprüche,
**dadurch gekennzeichnet, dass**
das Getriebegehäuse (10) aus Metall hergestellt wird.

11. Mehrstufiges Planetengetriebe nach einem der Ansprüche 6 bis 10,
**dadurch gekennzeichnet, dass**
der Lagerflansch als Motorflansch (30) ausgebildet ist.

## Claims

1. Multistage planetary gear with at least two ring gears with internal teeth connected to a housing in a torque-proof manner, and at least two sun wheels, each meshing with a ring gear and planetary wheels positioned on a planetary carrier, such that:
for the creation of a gear stage with at least one ring gear, the housing is constructed in one piece as a cylinder shaped gearbox (10) with internal teeth (11), and such that:
for the creation of at least one further gear stage a synthetic ring gear (20) with internal teeth (21) is incorporated into the gearbox (10), and anti-torsion devices (22, 23a, 23b) are provided for the torque-proof connection of the synthetic ring gear (20) with the gearbox (10),
**characterised by** the fact that a plug-in toothing connection (22) is provided as an anti-torsion device for the front-end connection of the synthetic ring gear (20) with the internal teeth (11) of the gearbox (10).

2. Multistage planetary gear in accordance with Claim 1, **characterised by** the fact that the gearbox (10) has a locating bore (12), adjusted to the external diameter of the synthetic ring gear (20) and linking axially to the internal teeth (11) to receive that ring gear (20).

3. Multistage planetary gear in accordance with Claim 2, **characterised by** the fact that, as a plug-in toothing connection on its front end (23) facing the internal teeth (11), the synthetic ring gear (20) has at least one tooth element (24)or tooth segment meshing into these internal teeth (11)of the gearbox (10).

4. Multistage planetary gear in accordance with Claim 3, **characterised by** the fact that, as a plug-in toothing connection, tooth elements (24) which mesh into the internal teeth (11) of the gearbox (10) are positioned in the form of a ring on the front-end (23) of the synthetic ring gear (20).

5. Multistage planetary gear in accordance with Claim 2, **characterised by** the fact that
- a bearing flange (30) connected in a torque-proof manner to the gearbox (10) is provided, and
- at least one tongue and groove element (26a, 26b) is provided as an anti-torsion device for the torque-free connection of the synthetic ring gear (20) to the bearing flange (30).

6. Multistage planetary gear in accordance with Claim 3, **characterised by** the fact that the synthetic ring gear (20) on the flange side front-end (25) has at least one tongue element (23a) which meshes with a groove (23b) in the bearing flange (30).

7. Multistage planetary gear in accordance with one of the foregoing claims, **characterised by** the fact that
- the synthetic ring gear (20) with the related sun wheel (40) and its associated planetary wheels (41) form a first gear stage, and
- the gearbox (10) with the internal teeth (11), together with the related sun wheel (50) and its associated planetary wheels (51), form a second gear stage.

8. Multistage planetary gear in accordance with one of the foregoing claims, **characterised by** the fact that
- the internal teeth (21) of the synthetic ring gear (20) are constructed as helical teeth, and
- the internal teeth (11) of the gearbox (10) are constructed as straight teeth.

9. Multistage planetary gear in accordance with one of the foregoing claims, **characterised by** the fact that the synthetic ring gear (20) is made as a die cast component.

10. Multistage planetary gear in accordance with one of the foregoing claims, **characterised by** the fact that the gearbox (10) is made of metal.

11. Multistage planetary gear in accordance with one of the Claims 6 to 10, **characterised by** the fact that the bearing flange is constructed as a motor flange (30).

## Revendications

1. Engrenage planétaire comportant au moins deux couronnes à dentures internes reliées solidairement en rotation à un carter et au moins deux roues solaires qui viennent respectivement en prise avec des roues planétaires montées sur un support planétaire et une couronne, dans lequel
pour former un étage d'engrenage avec au moins une couronne le carter est réalisé en une seule pièce sous la forme d'un carter d'engrenage (10) à denture interne (11), et
pour former au moins un autre étage d'engrenage, une couronne en matériau synthétique (20) à denture interne (21) est reçue par le carter d'engrenage (10), et
pour permettre une liaison solidaire en rotation de la couronne en matériau synthétique (20) avec le carter d'engrenage (10) des moyens de protection anti-torsion (22, 23a, 23b) sont prévus,
**caractérisé en ce que**
pour permettre la liaison côté frontal de la couronne en matériau synthétique (20) avec la denture interne (11) du carter d'engrenage (10) il est prévu une cannelure (22) en tant que moyen de protection anti-torsion.

2. Engrenage planétaire à plusieurs étages conforme à la revendication 1,
**caractérisé en ce que**
pour permettre la réception de la couronne en matériau synthétique (20) le carter d'engrenage (10) comporte un perçage de réception (12) adapté au diamètre externe de la couronne en matériau synthétique (20) et se raccordant axialement à la denture interne (11).

3. Engrenage planétaire à plusieurs étages conforme à la revendication 2,
**caractérisé en ce que**
la couronne en matériau synthétique (20) comporte en tant que cannelure sur sa face frontale (23) tournée vers la denture interne (11) au moins un élément de denture (24) ou un segment de denture venant en prise dans cette denture interne (11) du carter d'engrenage (10).

4. Engrenage planétaire à plusieurs étages conforme à la revendication 3,
**caractérisé en ce qu'**
en tant que cannelure sont montés annulairement sur la face frontale (23) de la couronne en matériau synthétique (20) des éléments de denture (24) qui viennent en prise dans la denture interne (11) du carter d'engrenage (10).

5. Engrenage planétaire à plusieurs étages conforme à la revendication 2,
**caractérisé en ce qu'**
- il est prévu une bride de palier (30) reliée solidairement en rotation au carter d'engrenage (10), et
- en tant que moyen de protection anti-torsion il est prévu au moins un élément à rainure et languette (26a, 26b) pour permettre la liaison solidaire en rotation de la couronne en matériau synthétique (20) avec la bride de palier (30).

6. Engrenage planétaire à plusieurs étages conforme à la revendication 3,
**caractérisé en ce que**
la couronne en matériau synthétique (20) comporte sur sa face frontale 25) située côté bride au moins un élément de languette (23a) qui vient en prise dans une rainure (23b) de la bride de palier (30).

7. Engrenage planétaire à plusieurs étages conforme à l'une des revendications précédentes,
**caractérisé en ce que**
la couronne en matériau synthétique (20) forme avec la roue solaire (40) associée et les roues planétaires (41) associées un premier étage d'engrenage, et
le carter d'engrenage (10) forme avec la denture interne (11) conjointement à la roue solaire associée (50) et aux roues planétaires (51) associées un second étage d'engrenage.

8. Engrenage planétaire à plusieurs étages conforme à conforme à l'une des revendications précédentes,
**caractérisé en ce que**
la denture interne (21) de la couronne en matériau synthétique (20) est réalisée sous la forme d'une denture oblique, et
la denture interne (11) du carter d'engrenage (10) est réalisée sous la forme d'une denture rectiligne.

9. Engrenage planétaire à plusieurs étages conforme à conforme à l'une des revendications précédentes,
**caractérisé en ce que**
la couronne en matériau synthétique (20) est réalisée sous la forme d'une pièce moulée par injection.

10. Engrenage planétaire à plusieurs étages conforme à conforme à l'une des revendications précédentes,
**caractérisé en ce que**
le carter d'engrenage (10) est réalisé en métal.

11. Engrenage planétaire à plusieurs étages conforme à conforme à l'une des revendications 6 à 10,
**caractérisé en ce que**
la bride de palier (30) est réalisée sous la forme d'une bride de moteur.
